# EUROPEAN PATENT SPECIFICATION

(11) **EP 1 842 708 B1**
(45) Date of publication and mention of the grant of the patent: **20.01.2010**
(21) Application number: 06380071.8
(22) Date of filing: 07.04.2006
(51) Int. Cl.: B60J 5/10, B60J 5/04

(54) **Method of mounting and mounting module for a rear liftgate for a motor vehicle, and rear liftgate**
Verfahren zur Montage und Montagemodul für Heckklappe eines Motorfahrzeuges, und Heckklappe
Procédé de montage et module de montage pour un hayon arrière, et hayon arrière

(43) Date of publication of application: 10.10.2007
(73) Proprietor: GRUPO ANTOLIN-INGENIERIA, S.A., 09007 Burgos (ES)
(72) Inventor: Juárez Maíllo, Jorge, 09003 Burgos (ES); Manzanas Rodríguez, Ricardo, 34230 Torquemada (Palencia) (ES)
(74) Representative: Carpintero Lopez, Francisco

(56) References cited:
- WO-A-01/85477
- WO-A-98/42527
- WO-A-99/61282
- US-A- 5 904 002
- US-A1- 2002 134 024
- US-A1- 2006 000 149

## Description

### TECHNICAL FIELD OF THE INVENTION

The invention is included in the field of motor vehicles and, more specifically, in the field of rear liftgates of said vehicles.

### BACKGROUND OF THE INVENTION

A rear liftgate of a motor vehicle comprises the liftgate panel or bodywork structure, a windscreen which closes a part of the liftgate, a trim panel for the inner covering of the panel and various functional elements, such as, for example, latches, handles, the wiper motor, license plate lights and electrical wiring harness.

Typically, the vehicle's rear liftgate is mounted in the following way:
Once the liftgate bodywork panel is mounted on the rest of the vehicle, the functional elements are mounted on the liftgate bodywork panel. Next, a trim panel, which covers the different functional elements and provides the desired aesthetic finish, is mounted on the liftgate panel. The windscreen is typically mounted on the liftgate panel before the functional elements.
However, this type of assembly is complicated and inconvenient due to the fact that the functional elements are placed on the liftgate when the liftgate is already mounted on the vehicle, which means that the engineers must work with the liftgate open and in quite uncomfortable positions. Furthermore, as it is necessary to mount several functional elements, several workers often work on the same liftgate simultaneously.
At first sight it may seem more practical to mount the functional components or elements on the liftgate before mounting the liftgate on the rest of the vehicle, but this is often not possible: it is usually necessary or convenient to paint the whole vehicle, with the liftgate mounted, for example, to avoid differences in colour. This means that the functional elements are usually mounted on the rear liftgate with the liftgate mounted, with the drawbacks this involves.
Attempts have been made to resolve this problem, designing modular solutions which are usually based on a reinforced trim panel whereon the functional elements have been pre-mounted for the mounting of this modular assembly on the liftgate panel. Systems also exist wherein the functional elements are pre-mounted on an independent support structure, producing a sub-assembly which is subsequently mounted on the trim panel, after which the complete assembly is mounted on the liftgate panel.
For example, WO-A-01/85477 discloses a modular support which consists of a trim panel. To give a structural character to the trim panel, so that it can withstand the stresses derived from the functional elements it supports (wiper motor, latch, etc.), the trim panel is reinforced. Therefore, in this case, the modules consist of a structural trim panel and the functional elements are mounted on the reinforced structure.
WO-A-98/42527 discloses a modular support based on a structural trim panel, wherein the functional elements are mounted on a reinforcement (reinforced metal or plastic). This reinforcement, with the functional elements mounted, is disposed on a trim, the reinforcement giving a structural character to the modular assembly produced. Finally, this entire assembly is mounted on the door box.
US-B-6776449 (corresponding to WO-A-02/72373) discloses an assembly formed from reinforcement whereon the functional elements are mounted and which is mounted on the door. The trim is mounted at a later stage, to cover the assembly. In this case, the trim panel does not form part of the modular assembly.
US-A-2002/0024234 discloses a structural modular support whereon the functional elements of the door are simultaneously mounted, so that by mounting this module on an opening of the door, the mounting would be completed.
JP-A-10-172656 discloses a trim panel that integrates, forming part of the panel, the connectors and the wiring harness to power the functional elements which require this.
In principle, this type of structural assembly may facilitate the mounting operations of the liftgate, but it has certain drawbacks, for example, the following:
   - The trim panel must be reinforced by structures, ribs or similar, since it must withstand the stresses generated by the functional elements during their operation. The functional elements are no longer fastened to the vehicle bodywork, but only to the trim panel or to an independent reinforced structure associated to the trim panel. This involves an increase in weight and cost of the trim panel (or of the assembly panel+reinforced structure) and, therefore, of the corresponding vehicle liftgate.
   - The trim panel reinforcements are disposed on the necessary areas of the trim panel to withstand the stresses, which means that the liftgate panel or structure must have a design which is compatible with these reinforcements, i.e. the vehicle manufacturer must also design the liftgate panel in accordance with the reinforced trim panel. It is not possible to use these reinforced trim panels in vehicles already being manufactured without making modifications to the panel.
   - It is not possible to mount the trim panel with the rear wiper motor pre-mounted on this trim panel, when the windscreen is already mounted on the liftgate panel, since the mounting direction of the trim panel with respect to the liftgate panel does not usually coincide with the direction of attachment of the motor output shaft which must pass through an opening provided in the windscreen. Manufacturers usually prefer to mount the windscreen on the liftgate panel before the functional elements and the trim panel are mounted, for which reason this may represent a large problem.
   - Although all the functional elements may be pre-mounted on the trim panel, it is still necessary to make the connection to the vehicle's electrical power, which is a very complicated operation as the trim panel hinders it. It would be necessary to have very long cables to be able to make the attachment before mounting the trim panel. Another solution may lie in providing the trim panel and the liftgate panel with plug-in connectors, which, nevertheless, are usually considerably more expensive than the connectors typically used for these functions; furthermore, said connectors will have to be positioned in fixed areas of the liftgate panel, which may involve important changes in the structure of said panel. These connectors must also have a self-centering device which allows the trim panel connectors to easily coincide with those of the liftgate panel.
Indeed, although these solutions using structural trim panels may have certain advantages compared with the conventional method wherein the functional elements are mounted individually on the panel, the use of this type of structural trim panels is not typical in the motor vehicle manufacturing sector, something possibly due to the aforementioned problems. Therefore, the normal procedure continues to be based on mounting the functional elements to the vehicle bodywork, followed by mounting the trim panel.
WO-A-03/031211 discloses a structure based on a non-structural trim module. The functional elements are pre-mounted on a conventional trim module without reinforcements. The trim module seems to act as a type of transport element of the functional elements, which is later dismounted from the trim module to be simultaneously mounted on the vehicle bodywork (see, for example, paragraphs [0012], [0024] and [0037] of WO-A-03/031211).

### DESCRIPTION OF THE INVENTION

A first aspect of the invention relates to a method of mounting a plurality of functional elements (for example, wiring harness, rear wiper motor, outer release support, latch, etc.) to a panel or rear liftgate structure for a motor vehicle. The method comprises the steps of:
a) producing or providing a module which comprises a trim panel (for example, plastic) whereto a plurality of functional elements (for example, those mentioned above, or at least some of them) are connected by first connection means;
b) attaching said module to the liftgate panel or structure (for example, by clips which form part of the trim panel or similar, i.e. using the type of means which are conventionally used to attach a trim panel to the liftgate structure); and
c) connecting at least a plurality of functional elements directly to the liftgate structure by second connection means, so that at least some of said functional elements are connected to the liftgate structure by said second connection means and, simultaneously, remain connected to the trim panel by said first connection means.

In this way, a light, simple and cheap trim panel can be used without substantial reinforcements, as it is sufficient that the panel is a "carrier" of the functional elements, to facilitate its attachment and fixing to the liftgate structure or panel. The liftgate structure is what acts as structural element, as the functional elements (or, at least, a plurality thereof, for example, the rear wiper motor) are connected to said liftgate structure directly by the second connection means. In this way, the aforementioned problems with regard to the state of the art are avoided. The carrier trim panel has the functional elements placed, by the first connection means, in their assembly positions on the rear liftgate, for which reason, once the trim panel with the functional elements has been attached to the liftgate structure or panel (e.g. by clips), it is only necessary to apply the second connection means, to complete the mounting, something which can be performed by one or several engineers during one phase or during different phases of the remainder of the vehicle assembly process. The functional elements are in their correct positions and are kept there by the first connection means, to then be firmly fixed to the liftgate structure by the second connection means. In other words, the functional elements are not disconnected from the panel at any time, thus facilitating the engineer's work as they are already in the final working position.

The first connection means may comprise quick connection means (for example, "clips" or similar quick connection means, for example, by dovetailing or similar; in this text, the expression "clip" refers to any connection means by "clipping" or "'snap' connection", suitable for a quick and simple attachment between two elements), to facilitate the mounting of the functional elements on the trim panel. Since the trim panel is not a structural element, it is not necessary to use bolts or similar "resistant" connection means to mount the functional elements on the trim panel. It is sufficient that the first connection means keep the functional elements in place during their transport and during the assembly process of the vehicle, until these functional elements have been connected to the liftgate structure with the second connection means. Therefore, in a possible embodiment, the first connection means comprise neither bolts nor nuts.

The first connection means may be identical or similar for all the functional elements, or different types of first connection means can be used for different functional elements, in accordance with the characteristics (for example, shape or weight) of each functional element.

For example, the first connection means may comprise elements (for example, protuberances which constitute "clips") which form an integral part of the trim panel and which are made of the same material as the trim panel, and which may have been formed together with the trim panel in the same moulding phase.

The second connection means may comprise bolts, nuts and/or similar fixing elements. The second connection means serve to connect at least some of the functional elements in a suitable manner to the liftgate structure or panel, which constitutes the structural element, for which reason some functional elements may be resistantly or firmly connected to this structure.

The functional elements may include a wiring harness which, after above step c), is connected to the trim panel by said first connection means, but which is not connected to the liftgate structure by the second connection means. The wiring harness is not a heavy structure and does not usually undergo high stresses during the life of the vehicle, for which reason the first connection means (for example, clips integrated in the trim panel) may be sufficient to keep the wiring harness in place during the life of the vehicle.

The wiring harness may be connected (for example, after step b) or even after step c)) to, at least, one connector associated to at least one functional element of the vehicle's rear liftgate, for example, to contacts of the rear lights, to contacts of the license plate lights, etc. It may also be connected to the vehicle's central power system after step b) or after step c).

The functional elements may include a rear wiper motor which, after step c), is connected to the trim panel by said first connection means (for example, clips), and connected to the liftgate panel or structure by the second connection means (for example, bolts). The first connection means mainly act to keep the motor connected to the trim panel during transport and mounting, until step c), whilst the second connection means are those which finally connect the motor, in a sufficiently resistant manner, to the structural element consisting of the liftgate structure or panel.

The rear wiper motor may be connected to the trim panel so that, before step b), the motor may pivot with respect to the trim panel, allowing a change in orientation of the output shaft of the rear wiper motor with respect to the trim panel. This may be useful to allow this shaft, during step b), to suitably pass through the corresponding opening in the rear windscreen, a windscreen which is usually mounted on the liftgate structure before the mounting module of the functional elements is mounted. The problem here is due to the fact that the motor output shaft is not usually oriented in the direction of movement of the mounting module (i.e. of the trim panel) during step b). A possibility of overcoming this problem consists of mounting the motor so that it can pivot slightly around the trim panel, allowing its output shaft to change orientation during the final approximation of the trim panel to the liftgate structure.

On the other hand, the rear windscreen liftgate can be equipped with an oblong through-hole to allow the rear wiper motor shaft to pass through; in this case, it is not necessary to mount the motor pivotably with respect to the trim panel.

The trim panel may comprise a plurality of openings positioned in correspondence with functional elements (or at least one opening of this type, for example, for the rear wiper motor). In this way, the step of connecting at least a plurality of functional elements to the liftgate panel or structure with said second connection means, can be performed through said openings. In other words, the engineer can, through the openings, access the functional elements to connect them to the liftgate structure, for example, by bolts. These openings also allow the wiring harness to be connected to functional elements of the liftgate and/or to the vehicle's central power system, for example, after step b) of the aforementioned method of mounting.

These openings may include at least two lateral openings (whereby, for example, an attachment can be made between the wiring harness connected to the trim panel and the vehicle's rear lights) and/or at least one opening to a rear wiper motor (whereby, at least, one connection can be made from the rear wiper motor to the liftgate structure, by said second connection means; this opening may be positioned in a central area or displaced to one or the other side, for example, if the arm of the rear wiper was not in the central area of the windscreen).

After step c), some or all of the openings can be closed by caps. These caps may be independent from the trim panel (and then separately supplied or temporarily connected to the trim panel by clips, adhesive tape or similar), but it is also possible that some or all of said caps form an integral part of the trim panel and are connected by a hinge or are pivotable to the rest of the trim panel. In other words, they may be caps which are produced together with the rest of the panel in the same production phase by moulding, and which are connected to the panel by one edge of the cap, by a weakened area which allows the cap to pivot between an open position and a closed position (where the corresponding opening is closed).

The functional elements may further comprise at least one outer release support and/or a latch, after step c), said support and/or said latch being connected to the trim panel by said first connection means, and connected to the liftgate structure by said second connection means.

The trim panel may, in step b), be attached to the liftgate structure by third connection means which comprise quick connection means, so that the trim panel is connected to the liftgate structure directly by said third connection means, and indirectly, through at least some of the functional elements, by said second connection means. The third connection means may be quick connection means such as, for example, clips or dovetail connectors which allow a quick attachment in step b).

The method may further comprise, before step a), the step of mounting at least a plurality of functional elements on the trim panel by said first connection means, so that said functional elements stay in positions corresponding to the positions they will occupy in the vehicle's rear liftgate (although a certain possibility of movement of the functional elements is not discarded; for example, in the case of the rear wiper motor, the functional element may pivot with respect to the trim panel).

As has been mentioned above, a non-structural trim panel can be used, with the advantages this involves. In other words, the function of the panel will be a carrier, not structural.

Another aspect of the invention relates to a mounting module, to mount a plurality of functional elements to a rear liftgate structure for a motor vehicle. The mounting module comprises a trim panel whereto a plurality of functional elements are connected by first connection means. At least a plurality of said functional elements are configured to be connected to the liftgate structure by second connection means, so that at least some of said functional elements are connected to the liftgate structure by said second connection means and, simultaneously, remain connected to the trim panel by said first connection means, once the mounting module has been attached to the liftgate structure.

What has been mentioned above with respect to the method is also applicable to the mounting module, *mutatis mutandis.*

For example:
The first connection means may comprise quick connection means, for example clips. In a possible embodiment of the invention, the first connection means comprise neither bolts nor nuts. The first connection means may comprise elements which form an integral part of the trim panel and which are made of the same material as the trim panel.
The second connection means may comprise bolts, nuts and/or similar.
The trim panel may comprise a plurality of openings positioned in correspondence with functional elements (or at least one opening, in said case, for the rear wiper motor), so that at least a plurality of functional elements can be connected to the liftgate structure with said second connection means, through said openings. The openings may include at least two lateral openings (whereby, for example, an attachment can be made between a wiring harness connected to the trim panel and the vehicle's rear lights) and/or at least one opening to a rear wiper motor (whereby, for example, the rear wiper motor can be connected to the liftgate structure, by said second connection means).
The mounting module may further comprise caps to close at least some of said openings; one or more caps may form part of the trim panel and be pivotably connected to the rest of the trim panel.
A plurality (for example, all) of the functional elements may be mounted on the trim panel by said first connection means before the module is attached to the liftgate structure, so that said functional elements stay in positions corresponding to the positions they will occupy in the vehicle's rear liftgate.
The trim panel may be a non-structural trim panel.
The functional elements may include a rear wiper motor connected to the trim panel in such a way that it allows said rear wiper motor to pivot with respect to the trim panel (allowing a change in orientation of an output shaft of the rear wiper motor during a mounting process of a rear liftgate).
Another aspect of the invention relates to a rear liftgate for a motor vehicle, which comprises a liftgate panel or structure and, connected to said liftgate panel or structure, a module as described above. The invention also relates to a liftgate for a motor vehicle produced with the aforementioned process.
The functional elements may include a wiring harness which is connected to the trim panel by said first connection means, and which is not connected to the liftgate structure by the second connection means.
The wiring harness is connected to, at least, one connector associated to at least one functional element of the vehicle's rear liftgate and/or to the vehicle's central power system.
The functional elements may include a rear wiper motor which is connected to the trim panel by said first connection means, and which is connected to the liftgate structure by the second connection means.
The functional elements may comprise at least one outer release support and/or a latch, connected to the trim panel by said first connection means, and connected to the liftgate structure by said second connection means.
Furthermore, the trim panel may comprise third connection means whereby it is connected to the liftgate structure, so that the trim panel is connected to the liftgate structure directly by said third connection means, and indirectly, through at least some of the structural elements, by said second connection means.

### DESCRIPTION OF THE FIGURES

To complement the description and with the object of helping towards a better understanding of the characteristics of the invention, in accordance with a preferred example of practical embodiment thereof, a set of figures is attached as an integral part of the description, wherein the following has been represented with an illustrative non-limitative character:
- Figure 1: Shows a schematic perspective view of a vehicle's rear liftgate according to a possible embodiment of the invention, wherein the liftgate panel or structure can be observed and, mounted thereon, a mounting module according to a possible embodiment of the invention.
- Figure 2: Shows a view of the visible surface of the mounting module, according to this embodiment of the invention.
- Figure 3: Shows a view of the hidden surface of the mounting module, according to the same embodiment of the invention.
- Figures 4-8: Show schematic perspective views of the hidden surface of the mounting module according to the same embodiment of the invention, wherein different aspects of the module can be observed in greater detail.
- Figure 9: Shows a perspective view of the rear liftgate according to an embodiment of the invention, with caps incorporated on the mounting module.
- Figure 10: Shows a schematic view of another possible form of connecting the rear wiper motor to the trim panel, by the first connection means.

### PREFERRED EMBODIMENT OF THE INVENTION

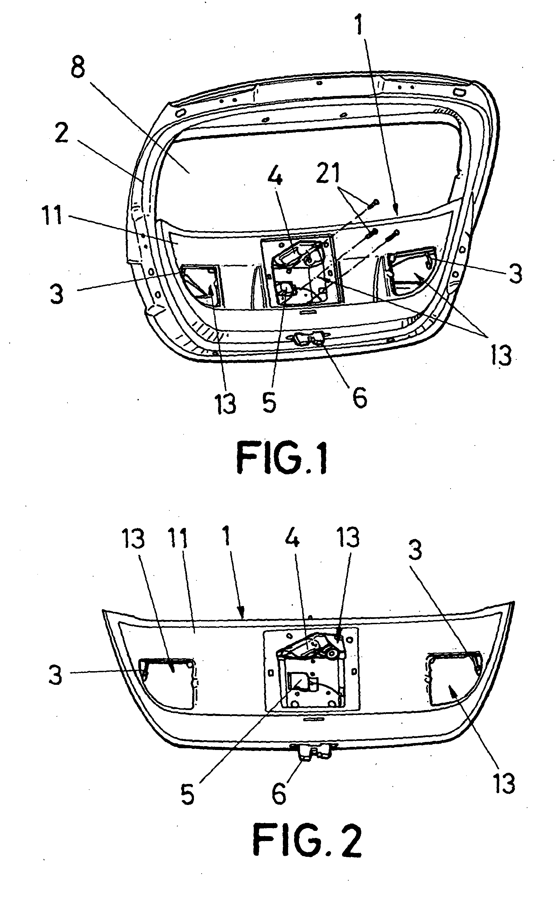

Figure 1 shows a rear liftgate for a motor vehicle, which comprises a liftgate panel or structure 2, with the rear windscreen 8 and with a mounting module 1, already mounted on the liftgate. When the mounting module 1 is mounted on the liftgate structure 2, the structure may already be connected to the rest of the bodywork of a vehicle (not illustrated), and painted with paint in a previous stage wherein the entire vehicle has been painted, to guarantee a homogeneous colour.

The mounting module 1 comprises a trim panel 11 made of plastic or similar, which, in figure 1, is seen from its visible surface. As can be observed, the panel is equipped with openings 13 which allow that functional elements (such as the rear wiper motor 4, the outer release support 5 and the latch 6) may be fixed to the liftgate structure 2 by bolts 21, from the visible surface of the trim panel 11 (these openings also allow the wiring harness 3 to be connected, through its corresponding connectors, to the vehicle's central power system or to components associated to the liftgate, i.e. components which are directly mounted on the liftgate -for example, lights, etc.-, making the connections from the visible surface of the mounting module). The functional elements connected to the mounting module 1 -for example, the rear wiper motor (4)-, are already connected to the wiring harness 3, through their respective connectors.

Figure 1 also shows part of the wiring harness 3 (which is not fixed with bolts to the liftgate structure 2).

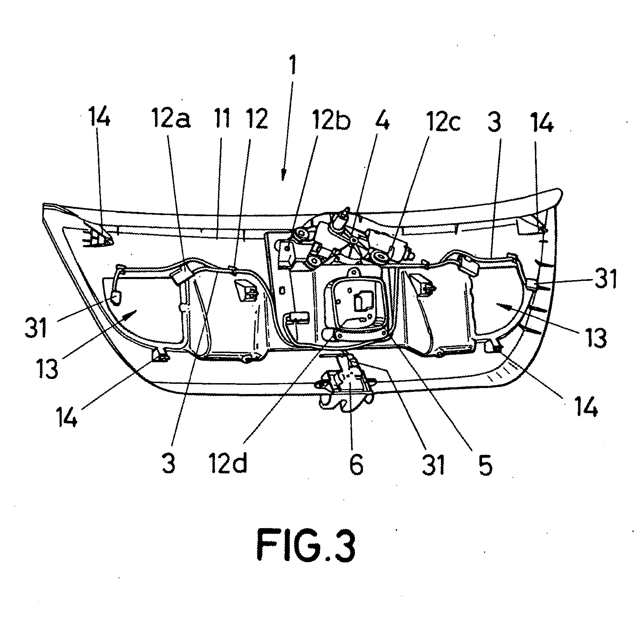

In figures 2 and 3, the mounting module can be observed in greater detail, from its visible and hidden surfaces, respectively. The functional elements (3-6) are connected to the trim panel 11 by first connection means in the form of clips (12, 12a, 12b, 12c, 12d), and all the functional elements illustrated will be connected to the structure 2 with bolts 21, with the exception of the wiring harness 3 which, since it does not undergo major stresses during its use, may only be fixed with the clips (12, 12a) and, through its connectors 31, to the vehicle's central power system and to various functional elements which form part of the vehicle's rear liftgate.

Figure 3 schematically illustrates the clips 14 whereby the mounting module may be attached to the liftgate structure 2. The clips 14 provide a quick attachment. The clips 14 are metal clips supported by turrets which form an integral part of said trim panel. On the other hand, the clips (12, 12a, 12b, 12c, 12d) which are used to attach the functional elements (3-6) to the trim panel 11, form an integral part of the trim panel, i.e. they are elements formed together with the rest of the panel, for example, in a moulding process.

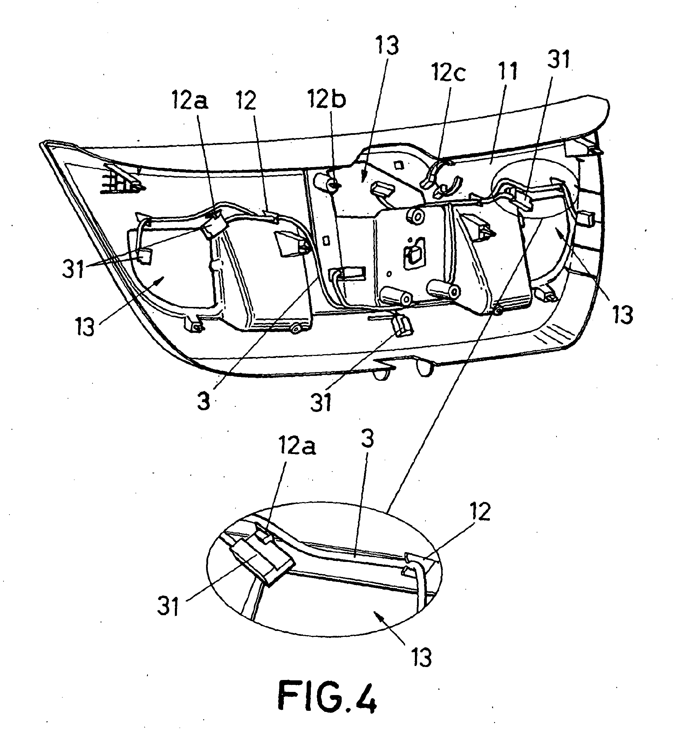

Figure 4 shows how the wiring harness 3 is connected to the trim panel 11 by fixing and guiding clips 12, whilst the connectors 31 in some cases are fixed with fastening clips 12a, especially designed to keep the connectors in a certain position so that it is easy for the engineer to connect the connector to the corresponding contact or connector of an accessory (for example, the vehicle's rear lights, etc.).

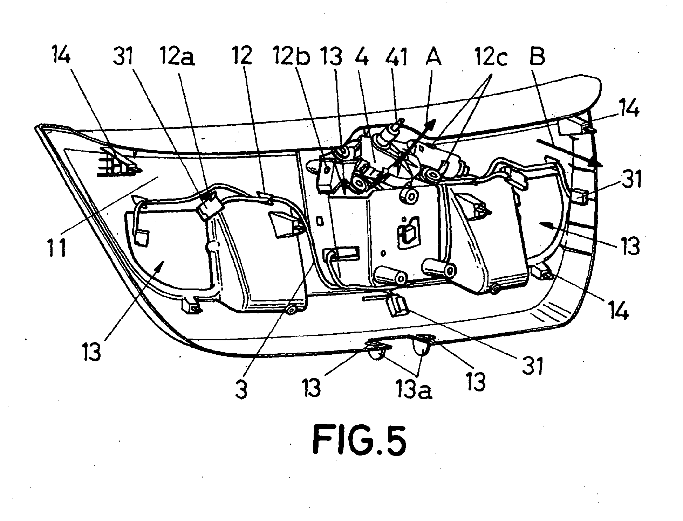

Figure 5 illustrates the mounting module with some of its components, and it indicates how the direction of movement (arrow "B") of the mounting module to mount the mounting module, in the final phase of its movement towards the liftgate structure 2 to be connected to said structure 2, is different from the general direction (arrow "A") wherein the output shaft 41 of the wiper motor 4 extends.

Since this shaft 41 must pass through an opening in the rear liftgate (for example, in the liftgate windscreen 8), the motor 4 is connected to the trim panel 11 by a first clip 12b which secures the motor at one point and which allows a tilting movement around said point, and by another clip formed by two arms 12c which grips a substantially cylindrical portion of the motor and which allows a certain rotation of the motor around the corresponding shaft. In this way, the motor 4 may pivot with respect to the trim panel 11, so that the output shaft 41 may change its orientation, something which occurs when the trim panel 11 is attached to the liftgate structure 2.

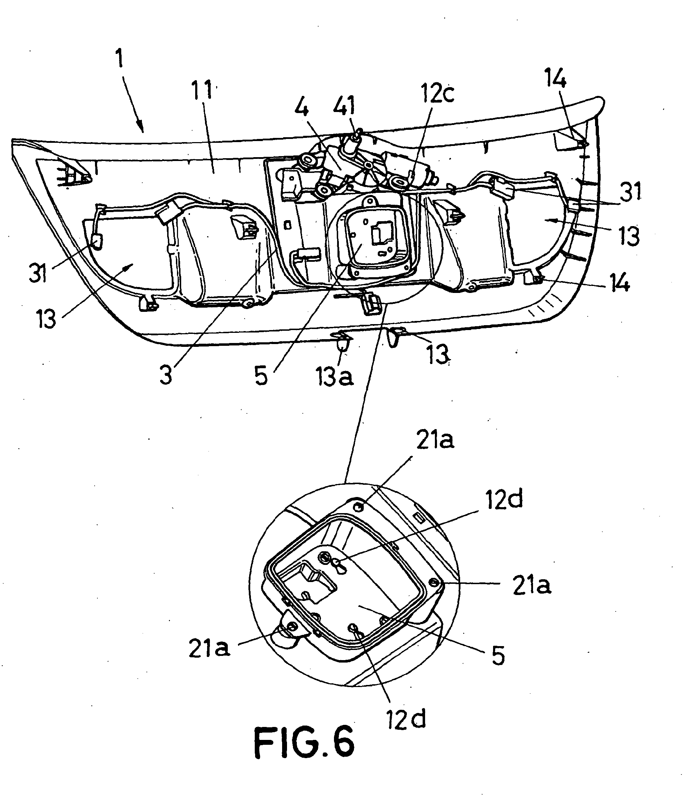

Figure 6 illustrates in greater detail how the outer release support 5 is connected to the trim panel 11 by clips 12d, and a plurality of openings 21 a, which permit the support 5 to be connected to the panel or liftgate structure 2, by bolts (not illustrated in this figure), can be observed.

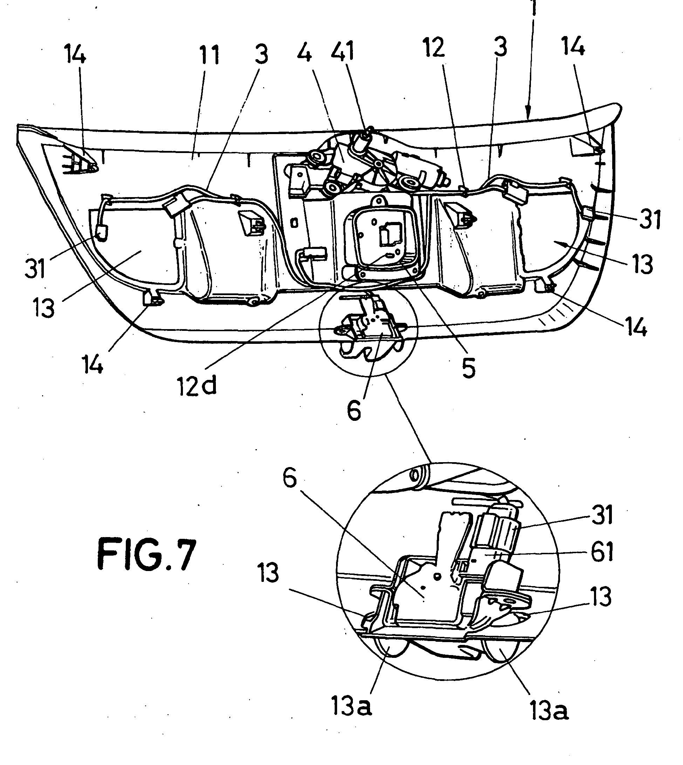

Figure 7 illustrates in greater detail where the latch 6 is attached to the trim panel 11. A latch connector 61 may be connected to a wiring harness 3 connector 31, for example, before the latch is connected to the trim panel with clips (not illustrated). Figure 7 also shows the openings 13 whereby, from the visible surface of the trim panel 11, the bolts are inserted whereby the latch 6 will be fixed to the liftgate structure 2, during the assembly of the vehicle bodywork. The caps 13a form a part of the trim panel and are articulated to cover the openings 13, once the latch 6 has been screwed to the liftgate structure 2.

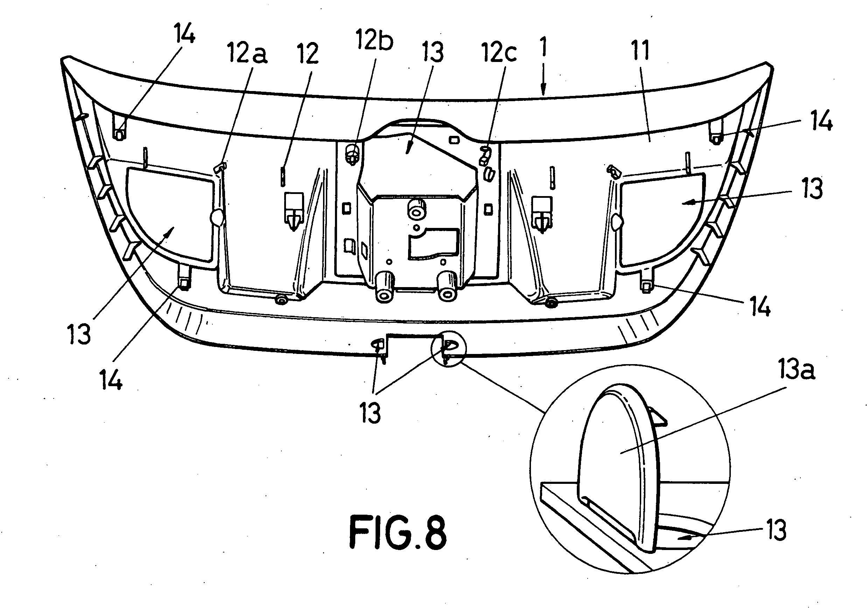

Figure 8 illustrates the caps 13a, as well as the different openings 13, in greater detail.

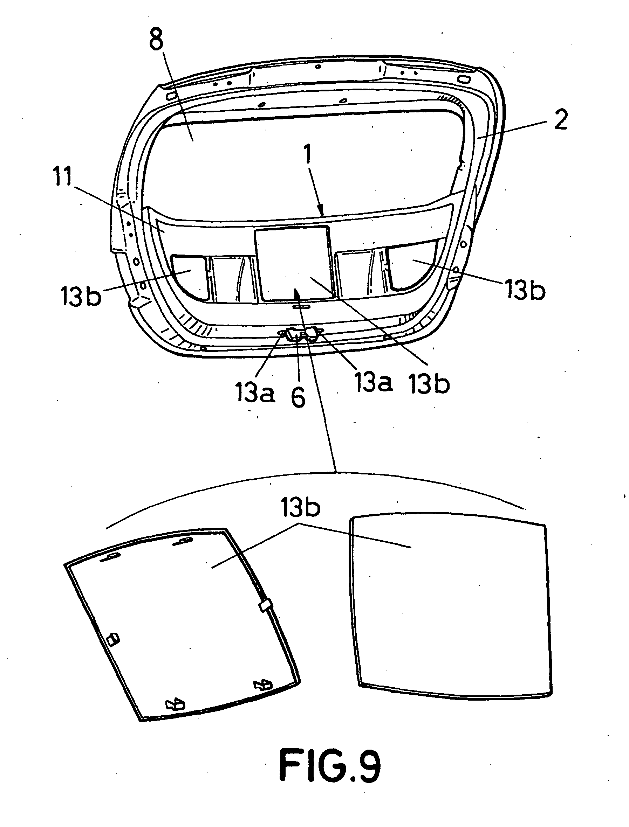

Figure 9 shows the rear liftgate with the mounting module 1 mounted on the liftgate structure 2. In this phase, the functional elements (except the wiring harness) have already been screwed to the liftgate structure 2, and the caps 13a articulated to the trim panel have been closed. Furthermore, on the other openings, caps 13b have been applied, one of which is illustrated in greater detail (both from the visible surface and the hidden surface) an enlargement of the figure.

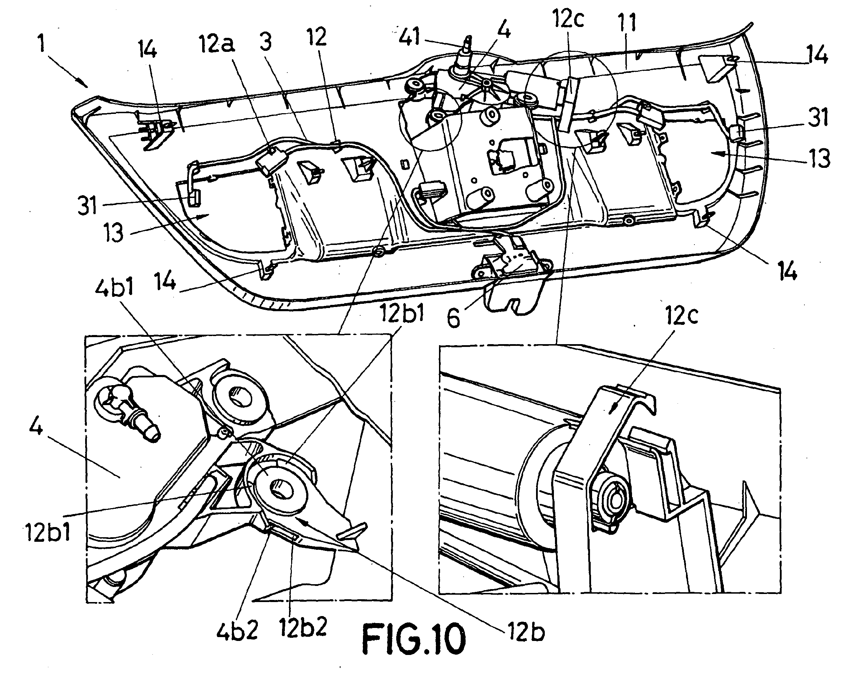

Figure 10 illustrates an alternative form of connecting the rear wiper motor 4 to the trim panel; in this variant, the clips 12b and 12c have a configuration different to that which has been illustrated in the other figures. The clip 12b, which extends from the trim panel, has two arms 12b1 which grip a substantially cylindrical element 4b1 associated to the rear wiper motor 4, whilst the clip has a lateral groove 12b2 wherein a protuberance 4b2 associated to the motor 4 enters, so that the motor 4 may pivot with respect to the clip 12b. Furthermore, at its opposite end, the motor 4 is attached to the clip 12c, also with the possibility of pivoting, as has been observed in figure 10.

In this text, the word "comprises" and variations thereof (such as "comprising", etc.) should not be taken as being exclusive, that is, they do not exclude the possibility that the item described might include other elements, steps, etc.

Furthermore, the invention is not limited to the specific embodiments described above, but also covers, for example, variations that might be made by the person skilled in the art (for example, as regards the choice of materials, dimensions, components, configuration, etc.), within the bounds of what can be inferred from the claims.

## Claims

1. Method of mounting a plurality of functional elements (3-6) to a rear liftgate structure (2) for a motor vehicle, which comprises the steps of:
a) providing a module (1) which comprises a trim panel (11) whereto a plurality of functional elements (3-6) is connected by first connection means (12, 12a, 12b, 12c, 12d);
b) attaching said module (1) to the liftgate structure (2); and
c) connecting at least a plurality of said functional elements (3-6) directly to the liftgate structure (2) by second connection means (21), so that at least some of said functional elements (3-6) are connected to the liftgate structure (2) by said second connection means (21) and, simultaneously, remain connected to the trim panel (11) by said first connection means (12, 12a, 12b, 12c, 12d).

2. Method according to claim 1, wherein the first connection means (12, 12a, 12b, 12c, 12d) comprise quick connection means, to facilitate the mounting of the functional elements (3-6) on the trim panel (11).

3. Method according to claim 2, wherein said quick connection means comprise clips.

4. Method according to any of the preceding claims, wherein said first connection means comprise neither bolts nor nuts.

5. Method according to any of the preceding claims, **characterized in that** the first connection means (12, 12a, 12b, 12c, 12d) comprise elements which form an integral part of the trim panel (11) and which are made of the same material as the trim panel.

6. Method according to any of the preceding claims, wherein the second connection means (21) comprise bolts and/or nuts.

7. Method according to any of the preceding claims, wherein the functional elements include a wiring harness (3) which, after step c), is connected to the trim panel (11) by said first connection means (12, 12a), but which is not connected to the liftgate structure (2) by the second connection means.

8. Method according to claim 7, wherein after step b), said wiring harness (3) is connected to at least one connector associated to at least one functional element of the vehicle's rear liftgate.

9. Method according to any of the preceding claims, wherein the functional elements include a rear wiper motor (4) which, after step a) is connected to the trim panel (11) by said first connection means (12b, 12c), and which, in step c), is connected to the liftgate structure (2) by the second connection means.

10. Method according to claim 9, wherein the rear wiper motor (4), before step b), is connected to the trim panel (11) in a manner that allows said rear wiper motor to pivot with respect to the trim panel (11), allowing a change in orientation of an output shaft (41) of the rear wiper motor (4).

11. Method according to any of the preceding claims, wherein the trim panel comprises at least one opening (13), said, at least one, opening being positioned in correspondence with at least one functional element, the step of connecting at least a plurality of functional elements to the liftgate structure (2) with said second connection means (21), being performed at least partially through said, at least one, opening (13).

12. Method according to claim 11, wherein said, at least one, opening (13) includes at least one opening to a rear wiper motor, whereby the rear wiper motor (4) is connected to the liftgate structure (2), by said second connection means (21).

13. Method according to claim 11 or 12, wherein said, at least one, opening (13) includes at least two lateral openings, whereby an attachment is made between a wiring harness (3) connected to the trim panel, and the vehicle's rear lights.

14. Method according to any of claims 11-13, wherein, after step c), at least one of said, at least one, opening (13) is closed by a cap (13a, 13b).

15. Method according to claim 14, wherein at least one of said, at least one, cap (13a) forms part of the trim panel (11) and is pivotably connected to the rest of the trim panel.

16. Method according to any of the preceding claims, wherein the functional elements comprise at least one outer release support (5), after step c), said support (5) being connected to the trim panel (11) by said first connection means (12d), and connected to the liftgate structure (2) by said second connection means (21).

17. Method according to any of the preceding claims, wherein the functional elements comprise at least one latch (6), after step c), said latch (6) being connected to the trim panel (11) by said first connection means (12d), and connected to the liftgate structure (2) by said second connection means (21).

18. Method according to any of the preceding claims, wherein, in step b), the trim panel (11) is attached to the liftgate structure (2) by third connection means (14) which comprise quick connection means, so that the trim panel, after step c), is simultaneously connected to the liftgate structure (2) by said third connection means (14), and simultaneously connected, through at least some of the functional elements (4-6), by said second connection means (21).

19. Method according to any of the preceding claims, wherein, before step a), at least a plurality of functional elements (3-6) are mounted on the trim panel (11) by said first connection means (12, 12a, 12b, 12c, 12d), so that said functional elements stay in positions corresponding to the positions they will occupy in the vehicle's rear liftgate.

20. Method according to any of the preceding claims, **characterized in that** a non-structural trim panel (11) is used.

21. Mounting module, to mount a plurality of functional elements (3-6) on a rear liftgate structure (2) for a motor vehicle, the mounting module comprising a trim panel (11) whereto a plurality of functional elements (3-6) are connected by first connection means (12, 12a, 12b, 12c, 12d);
**characterized in that**
at least a plurality of said functional elements (3-6) are configured to be connected to the liftgate structure (2) by second connection means (21), so that at least some of said functional elements (3-6) are connected to the liftgate structure (2) by said second connection means (21) and, simultaneously, remain connected to the trim panel (11) by said first connection means (12, 12a, 12b, 12c, 12d), once the mounting module has been attached to the liftgate structure (2).

22. Module according to claim 21, wherein the first connection means (12, 12a, 12b, 12c, 12d) comprise quick connection means, to facilitate the mounting of the functional elements on the trim panel (11).

23. Module according to claim 22, wherein said quick connection means comprise clips.

24. Module according to any of claims 21-23, wherein said first connection means comprise neither bolts nor nuts.

25. Module according to any of claims 21-24, **characterized in that** the first connection means (12, 12a, 12b, 12c, 12d) comprise elements which form an integral part of the trim panel (11) and are made of the same material as the trim panel.

26. Module according to any of claims 21-25, wherein the second connection means (21) comprise bolts and/or nuts.

27. Module according to any of claims 21-26, wherein the trim panel comprises at least one opening (13), said, at least one, opening, being positioned in correspondence with at least one functional element (3-6), so that said, at least one, functional element can be connected to the liftgate structure (2) with said second connection means (21), through said, at least one, opening.

28. Module according to claim 27, wherein said, at least one, opening (13) includes at least one opening to a rear wiper motor, whereby the rear wiper motor (4) can be connected to the liftgate structure (2), by said second connection means (21).

29. Module according to claim 27 or 28, wherein said, at least one, opening (13) includes at least two lateral openings, whereby an attachment can be made between a wiring harness (3) connected to the trim panel and the vehicle's rear lights.

30. Module according to any of claims 27-29, wherein the mounting module further comprises at least one cap (13a, 13b) to close at least one of said, at least one, opening (13).

31. Module according to claim 30, wherein at least one of said, at least one, cap (13a) forms part of the trim panel (11) and is pivotably connected to the rest of the trim panel.

32. Module according to any of claims 21-31, wherein, before the module is attached to the liftgate structure (2), at least a plurality of functional elements (3-6) are mounted on the trim panel (11) by said first connection means (12, 12a, 12b, 12c, 12d), so that said functional elements stay in positions corresponding to the positions they will occupy on the vehicle's rear liftgate.

33. Module according to any of claims 21-32, **characterized in that** the trim panel (11) is a non-structural trim panel.

34. Module according to any of claims 21-33, wherein the functional elements include a rear wiper motor (4) connected to the trim panel (11) in such a way that it allows said rear wiper motor to pivot with respect to the trim panel (11), allowing a change in orientation of an output shaft (41) of the rear wiper motor (4) during a rear liftgate mounting process.

35. Rear liftgate for a motor vehicle, which comprises a liftgate structure (2) and, connected a said liftgate structure (2), a module according to any of claims 21-34.

36. Rear liftgate according to claim 35, wherein the functional elements include a wiring harness (3) which is connected to the trim panel (11) by said first connection means (12, 12a), and which is not connected to the liftgate structure (2) by the second connection means.

37. Rear liftgate according to any of claims 35-36, wherein the functional elements include a rear wiper motor (4) which is connected to the trim panel (11) by said first connection means (12b, 12c), and which is connected to the liftgate structure (2) by the second connection means.

38. Rear liftgate according to any of claims 35-37, wherein the functional elements comprise at least one outer release support (5), connected to the trim panel (11) by said first connection means (12d), and connected to the liftgate structure (2) by said second connection means (21).

39. Rear liftgate according to any of claims 35-38, wherein the functional elements comprise at least one latch (6), connected to the trim panel (11) by said first connection means (12d), and connected to the liftgate structure (2) by said second connection means (21).

40. Rear liftgate according to any of claims 35-39, wherein the trim panel (11) comprises third connection means (14) whereby the trim panel is connected to the liftgate structure (2), so that the trim panel is simultaneously connected to the liftgate structure (2) by said third connection means (14), and simultaneously connected, through at least some of the functional elements (4-6), by said second connection means (21).

## Patentansprüche

1. Verfahren zur Montage von einer Vielzahl von Funktionselementen (3-6) an einem Heckklappenaufbau (2) für ein Kraftfahrzeug, enthaltend die Schritte:
a) Bereitstellen eines Moduls (1), welches eine Verkleidung (11) aufweist, mit welcher eine Vielzahl von Funktionselementen (3-6) durch erste Verbindungseinrichtungen (12, 12a, 12b, 12c, 12d) verbunden werden;
b) Anbringen des Moduls (1) an dem Heckklappenaufbau (2); und
c) Verbinden mindestens einer Vielzahl der Funktionselemente (3-6) direkt mit dem Heckklappenaufbau (2) mittels zweiter Verbindungseinrichtungen (21), so dass mindestens einige der Funktionselemente (3-6) durch die zweiten Verbindungseinrichtungen (21) mit dem Heckklappeaufbau (2) verbunden sind und gleichzeitig mit der Verkleidung (11) durch die ersten Verbindungseinrichtungen (12, 12a, 12b, 12c, 12d) verbunden bleiben.

2. Verfahren nach Anspruch 1, bei welchem die ersten Verbindungseinrichtungen (12, 12a, 12b, 12c, 12d) Schnellverbindungseinrichtungen enthalten, um die Montage der Funktionselemente (3-6) an der Verkleidung (11) zu erleichtern.

3. Verfahren nach Anspruch 2, bei welchem die Schnellverbindungseinrichtungen Clips aufweisen.

4. Verfahren nach einem der vorstehenden Ansprüche, bei welchem die ersten Verbindungseinrichtungen weder Schrauben noch Muttern enthalten.

5. Verfahren nach einem der vorstehenden Ansprüche, **dadurch gekennzeichnet, dass** die ersten Verbindungseinrichtungen (12, 12a, 12b, 12c, 12d) Elemente enthalten, die einen integralen Teil der Verkleidung (11) bilden und die aus demselben Material wie die Verkleidung hergestellt sind.

6. Verfahren nach einem der vorstehenden Ansprüche, bei welchem die zweiten Verbindungseinrichtungen (21) Schrauben und/oder Muttern enthalten.

7. Verfahren nach einem der vorstehenden Ansprüche, bei welchem die Funktionselemente einen Kabelbaum (3) aufweisen, welcher nach Schritt c) mit der Verkleidung (11) durch die ersten Verbindungseinrichtungen (12, 12a) verbunden wird, welcher jedoch nicht durch die zweiten Verbindungseinrichtungen mit dem Heckklappenaufbau (2) verbunden wird.

8. Verfahren nach Anspruch 7, bei welchem nach Schritt b) der Kabelbaum (3) mit mindestens einem Steckverbinder verbunden wird, der zu mindestens einem Funktionselement der Heckklappe des Fahrzeugs gehört.

9. Verfahren nach einem der vorstehenden Ansprüche, bei welchem die Funktionselemente einen Heckscheibenwischermotor (4) enthalten, welcher nach Schritt a) mit der Verkleidung (11) durch die ersten Verbindungseinrichtungen (12b, 12c) verbunden wird und welcher in Schritt c) durch die zweiten Verbindungseinrichtungen mit dem Heckklappenaufbau (2) verbunden wird.

10. Verfahren nach Anspruch 9, bei welchem der Heckscheibenwischermotor (4) vor Schritt b) mit der Verkleidung (11) in einer Weise verbunden wird, die es erlaubt, den Heckscheibenwischermotor relativ zu der Verkleidung (11) zu schwenken, was eine Veränderung der Ausrichtung einer Antriebswelle (41) des Heckscheibenwischermotors (4) erlaubt.

11. Verfahren nach einem der vorstehenden Ansprüche, bei welchem die Verkleidung mindestens eine Öffnung (13) aufweist, welche mindestens eine Öffnung in Übereinstimmung mit mindestens einem Funktionselement positioniert ist, wobei der Schritt des Verbindens mindestens einer Vielzahl von Funktionselementen mit dem Heckklappenaufbau (2) mit den zweiten Verbindungseinrichtungen (21) wenigstens teilweise durch die mindestens eine Öffnung (13) ausgeführt wird.

12. Verfahren nach Anspruch 11, bei welchem die mindestens eine Öffnung (13) mindestens eine Öffnung zu einem Heckscheibenwischermotor umfasst, wodurch der Heckscheibenwischermotor (4) mit dem Heckklappenaufbau (2) durch die zweiten Verbindungseinrichtungen (21) verbunden wird.

13. Verfahren nach Anspruch 11 oder 12, bei welchem die mindestens eine Öffnung (13) mindestens zwei seitliche Öffnungen umfasst, wodurch eine Montage zwischen einem mit der Verkleidung verbundenen Kabelbaum (3) und den Heckleuchten des Fahrzeugs erfolgt.

14. Verfahren nach einem der Ansprüche 11-13, bei welchem nach Schritt c) mindestens eine der mindestens einen Öffnung (13) durch eine Abdeckung (13a, 13b) verschlossen wird.

15. Verfahren nach Anspruch 14, bei welchem mindestens eine der mindestens einen Abdeckung (13a) einen Teil der Verkleidung (11) bildet und mit dem Rest der Verkleidung schwenkbar verbunden ist.

16. Verfahren nach einem der vorstehenden Ansprüche, bei welchem die Funktionselemente mindestens einen Träger (5) für eine äußere Öffnungseinrichtung aufweisen, wobei nach Schritt c) der Träger (5) mit der Verkleidung (11) durch die ersten Verbindungseinrichtungen (12d) verbunden wird und durch die zweiten Verbindungseinrichtungen (21) mit dem Heckklappenaufbau (2) verbunden wird.

17. Verfahren nach einem der vorstehenden Ansprüche, bei welchem die Funktionselemente mindestens ein Schloss (6) aufweisen, wobei nach Schritt c) das Schloss (6) mit der Verkleidung (11) durch die ersten Verbindungseinrichtungen (12d) verbunden wird und mit dem Heckklappenaufbau (2) durch die zweiten Verbindungseinrichtungen (21) verbunden wird.

18. Verfahren nach einem der vorstehenden Ansprüche, bei welchem in Schritt b) die Verkleidung (11) an dem Heckklappenaufbau (2) durch dritte Verbindungseinrichtungen (14) angebracht wird, welche Schnellverbindungseinrichtungen enthalten, so dass die Verkleidung nach Schritt c) gleichzeitig durch die dritten Verbindungseinrichtungen (14) mit dem Heckklappenaufbau (2) verbunden wird und gleichzeitig über mindestens einige der Funktionselemente (4-6) durch die zweiten Verbindungseinrichtungen (21) verbunden wird.

19. Verfahren nach einem der vorstehenden Ansprüche, bei welchem vor Schritt a) mindestens eine Vielzahl der Funktionselemente (3-6) durch die ersten Verbindungseinrichtungen (12, 12a, 12b, 12c, 12d) an der Verkleidung (11) montiert werden, so dass die Funktionselemente in Positionen verbleiben, die den Positionen entsprechen, die sie in der Heckklappe des Fahrzeugs einnehmen werden.

20. Verfahren nach einem der vorstehenden Ansprüche, **dadurch gekennzeichnet, dass** eine nichttragende Verkleidung (11) verwendet wird.

21. Montagemodul zur Befestigung einer Vielzahl von Funktionselemente (3-6) an einem Heckklappenaufbau (2) für ein Kraftfahrzeug, welches Montagemodul eine Verkleidung (11) aufweist, mit welcher eine Vielzahl von Funktionselementen (3-6) durch erste Verbindungseinrichtungen (12, 12a, 12b, 12c, 12d) verbunden sind;
**dadurch gekennzeichnet, dass** mindestens eine Vielzahl der Funktionselemente (3-6) so konfiguriert ist, dass sie mit dem Heckklappenaufbau (2) durch zweite Verbindungseinrichtungen (21) verbunden werden können, so dass mindestens einige der Funktionselemente (3-6) mit dem Heckklappenaufbau (2) durch die zweiten Verbindungseinrichtungen (21) verbunden sind und gleichzeitig mit der Verkleidung (11) durch die ersten Verbindungseinrichtungen (12, 12a, 12b, 12c, 12d) verbunden bleiben, sobald das Montagemodul an dem Heckklappenaufbau befestigt ist.

22. Modul nach Anspruch 21, bei welchem die ersten Verbindungseinrichtungen (12, 12a, 12b, 12c, 12d) Schnellverbindungseinrichtungen enthalten, um die Montage der Funktionselemente (3-6) an der Verkleidung (11) zu erleichtern.

23. Modul nach Anspruch 22, bei welchem die Schnellverbindungseinrichtungen Clips aufweisen.

24. Modul nach einem der Ansprüche 21-23, bei welchem die ersten Verbindungseinrichtungen weder Schrauben noch Muttern enthalten.

25. Modul nach einem der Ansprüche 21-24, **dadurch gekennzeichnet, dass** die ersten Verbindungseinrichtungen (12, 12a, 12b, 12c, 12d) Elemente enthalten, die einen integralen Teil der Verkleidung (11) bilden und die aus demselben Material wie die Verkleidung hergestellt sind.

26. Modul nach einem der Ansprüche 21-25, bei welchem die zweiten Verbindungseinrichtungen (21) Schrauben und/oder Muttern enthalten.

27. Modul nach einem der Ansprüche 21-26, bei welchem die Verkleidung mindestens eine Öffnung (13) aufweist, welche mindestens eine Öffnung in Übereinstimmung mit mindestens einem Funktionselement (3-6) positioniert ist, so dass das mindestens eine vom Funktionselement mit dem Heckklappenaufbau (2) mit den zweiten Verbindungseinrichtungen (21) durch die mindestens eine Öffnung (13) verbunden werden kann.

28. Modul nach Anspruch 27, bei welchem die mindestens eine Öffnung (13) mindestens eine Öffnung zu einem Heckscheibenwischermotor umfasst, wodurch der Heckscheibenwischermotor (4) mit dem Heckklappenaufbau (2) durch die zweiten Verbindungseinrichtungen (21) verbunden werden kann.

29. Modul nach Anspruch 27 oder 28, bei welchem die mindestens eine Öffnung (13) mindestens zwei seitliche Öffnungen umfasst, wodurch eine Montage zwischen einem mit der Verkleidung verbundenen Kabelbaum (3) und den Heckleuchten des Fahrzeugs erfolgen kann.

30. Modul nach einem der Ansprüche 27-29, bei welchem das Montagemodul ferner mindestens eine Abdeckung (13a, 13b) aufweist, um mindestens eine der mindestens einen Öffnung (13) zu verschließen.

31. Modul nach Anspruch 30, bei welchem mindestens eine der mindestens einen Abdeckung (13a) einen Teil der Verkleidung (11) bildet und mit dem Rest der Verkleidung schwenkbar verbunden ist.

32. Modul nach einem der Ansprüche 21-31, bei welchem mindestens eine Vielzahl der Funktionselemente (3-6) durch die ersten Verbindungseinrichtungen (12, 12a, 12b, 12c, 12d) an der Verkleidung (11) montiert werden, bevor das Modul an dem Heckklappenaufbau (2) angebracht wird, so dass die Funktionselemente in Positionen verbleiben, die den Positionen entsprechen, die sie in der Heckklappe des Fahrzeugs einnehmen werden.

33. Modul nach einem der Ansprüche 21-32, **dadurch gekennzeichnet, dass** die Verkleidung (11) eine nichttragende Verkleidung ist.

34. Modul nach einem der Ansprüche 21-33, bei welchem die Funktionselemente einen Heckscheibenwischermotor (4) umfassen, welcher mit der Verkleidung (11) in einer Weise verbunden ist, die es erlaubt, den Heckscheibenwischermotor relativ zu der Verkleidung (11) zu schwenken, was eine Veränderung der Ausrichtung einer Antriebswelle (41) des Heckscheibenwischermotors (4) während eines Montagevorgangs der Heckklappe erlaubt.

35. Heckklappe für ein Kraftfahrzeug, welche einen Heckklappenaufbau (2) und ein mit dem Heckklappenaufbau (2) verbundenes Modul nach einem der Ansprüche 21-34 enthält.

36. Heckklappe nach Anspruch 35, bei welcher die Funktionselemente einen Kabelbaum (3) umfassen, welcher mit der Verkleidung (11) durch die ersten Verbindungseinrichtungen (12, 12a) verbunden ist und welcher nicht durch die zweiten Verbindungseinrichtungen mit dem Heckklappenaufbau (2) verbunden ist.

37. Heckklappe nach einem der Ansprüche 35-36, bei welcher die Funktionselemente einen Heckscheibenwischermotor (4) umfassen, welcher mit der Verkleidung (11) durch die ersten Verbindungseinrichtungen (12b, 12c) verbunden ist und welcher mit dem Heckklappenaufbau (2) durch die zweiten Verbindungseinrichtungen verbunden ist.

38. Heckklappe nach einem der Ansprüche 35-37, bei welcher die Funktionselemente mindestens einen Träger (5) für einen äußere Öffnungseinrichtung aufweisen, welcher mit der Verkleidung (11) durch die ersten Verbindungseinrichtungen (12d) verbunden ist und mit dem Heckklappenaufbau (2) durch die zweiten Verbindungseinrichtungen (21) verbunden ist.

39. Heckklappe nach einem der Ansprüche 35-38, bei welcher die Funktionselemente mindestens ein Schloss (6) enthalten, welches mit der Verkleidung (11) durch die ersten Verbindungseinrichtungen (12d) verbunden ist und mit dem Heckklappenaufbau (2) durch die zweiten Verbindungseinrichtungen (21) verbunden ist.

40. Heckklappe nach einem der Ansprüche 35-39, bei welcher die Verkleidung (11) dritte Verbindungseinrichtungen (14) einschließt, durch welche die Verkleidung mit dem Heckklappenaufbau (2) verbunden ist, so dass die Verkleidung gleichzeitig durch die dritten Verbindungseinrichtungen (14) mit dem Heckklappenaufbau (2) verbunden ist und gleichzeitig über mindestens einige der Funktionselemente (4-6) durch die zweiten Verbindungseinrichtungen (21) verbunden ist.

## Revendications

1. Procédé pour monter une pluralité d'éléments fonctionnels (3 - 6) sur une structure de hayon arrière (2) pour un véhicule à moteur, comprenant les étapes consistant à :
a) prévoir un module (1) qui comprend un panneau de garniture (11) auquel une pluralité d'éléments fonctionnels (3-6) est raccordée par des premiers moyens de raccordement (12, 12a, 12b, 12c, 12d) ;
b) fixer ledit module (1) sur la structure de hayon (2) ; et
c) raccorder au moins une pluralité desdits éléments fonctionnels (3 - 6) directement sur la structure de hayon (2) par des deuxièmes moyens de raccordement (21), de sorte qu'au moins certains desdits éléments fonctionnels (3 - 6) sont raccordés à la structure de hayon (2) par lesdits deuxièmes moyens de raccordement (21) et, simultanément, restent raccordés au panneau de garniture (11) par lesdits premiers moyens de raccordement (12, 12a, 12b, 12c, 12d).

2. Procédé selon la revendication 1, dans lequel les premiers moyens de raccordement (12, 12a, 12b, 12c, 12d) comprennent des moyens de raccordement rapide, afin de faciliter le montage des éléments fonctionnels (3 - 6) sur le panneau de garniture (11).

3. Procédé selon la revendication 2, dans lequel lesdits moyens de raccordement rapide comprennent des attaches.

4. Procédé selon l'une quelconque des revendications précédentes, dans lequel lesdits premiers moyens de raccordement ne comprennent ni boulons ni écrous.

5. Procédé selon l'une quelconque des revendications précédentes, **caractérisé en ce que** les premiers moyens de raccordement (12, 12a, 12b, 12c, 12d) comprennent des éléments qui font partie intégrante du panneau de garniture (11) et qui sont réalisés avec le même matériau que le panneau de garniture.

6. Procédé selon l'une quelconque des revendications précédentes, dans lequel des deuxièmes moyens de raccordement (21) comprennent des boulons et/ou des écrous.

7. Procédé selon l'une quelconque des revendications précédentes, dans lequel les éléments fonctionnels comprennent un faisceau de fils (3) qui, après l'étape c), est raccordé au panneau de garniture (11) par lesdits premiers moyens de raccordement (12, 12a), mais qui n'est pas raccordé à la structure de hayon (2) par les deuxièmes moyens de raccordement.

8. Procédé selon la revendication 7, dans lequel après l'étape b), ledit faisceau de fils (3) est raccordé à au moins un connecteur associé au au moins un élément fonctionnel du hayon arrière du véhicule.

9. Procédé selon l'une quelconque des revendications précédentes, dans lequel les éléments fonctionnels comprennent un moteur d'essuie-glace arrière (4) qui, après l'étape a), est raccordé au panneau de garniture (11) par lesdits premiers moyens de raccordement (12b, 12c), et qui, à l'étape c), est raccordé à la structure de hayon (2) par les deuxièmes moyens de raccordement.

10. Procédé selon la revendication 9, dans lequel le moteur d'essuie-glace arrière (4), avant l'étape b), est raccordé au panneau de garniture (11) d'une manière qui permet audit moteur d'essuie-glace arrière de pivoter par rapport au panneau de garniture (11), permettant un changement d'orientation d'un arbre de sortie (41) du moteur d'essuie-glace arrière (4).

11. Procédé selon l'une quelconque des revendications précédentes, dans lequel le panneau de garniture comprend au moins une ouverture (13), ladite au moins une ouverture étant positionnée en correspondance avec au moins un élément fonctionnel, l'étape consistant à raccorder au moins une pluralité d'éléments fonctionnels à la structure de hayon (2) avec lesdits deuxièmes moyens de raccordement (21) étant réalisée au moins partiellement à travers ladite au moins une ouverture (13).

12. Procédé selon la revendication 11, dans lequel ladite au moins une ouverture (13) comprend au moins une ouverture sur le moteur d'essuie-glace arrière, moyennant quoi le moteur d'essuie-glace arrière (4) est raccordé à la structure de hayon (2), par lesdits deuxièmes moyens de raccordement (21).

13. Procédé selon la revendication 11 ou 12, dans lequel ladite au moins une ouverture (13) comprend au moins deux ouvertures latérales, moyennant quoi une fixation est réalisée entre un faisceau de fils (3) raccordé au panneau de garniture, et les feux arrière du véhicule.

14. Procédé selon l'une quelconque des revendications 11 à 13, dans lequel, après l'étape c), au moins l'une de ladite au moins une ouverture (13) est fermée par un capuchon (13a, 13b).

15. Procédé selon la revendication 14, dans lequel au moins l'un dudit au moins un capuchon (13a) fait partie du panneau de garniture (11) et est raccordé de manière pivotante au reste du panneau de garniture.

16. Procédé selon l'une quelconque des revendications précédentes, dans lequel les éléments fonctionnels comprennent au moins un support de libération externe (5), après l'étape c), ledit support (5) étant raccordé au panneau de garniture (11) par lesdits premiers moyens de raccordement (12d), et raccordé à la structure de hayon (2) par lesdits deuxièmes moyens de raccordement (21).

17. Procédé selon l'une quelconque des revendications précédentes, dans lequel les éléments fonctionnels comprennent au moins un verrou (6), après l'étape c), ledit verrou (6) étant raccordé au panneau de garniture (11) par lesdits premiers moyens de raccordement (12d), et raccordé à la structure de hayon (2) par lesdits deuxièmes moyens de raccordement (21).

18. Procédé selon l'une quelconque des revendications précédentes, dans lequel, à l'étape b), le panneau de garniture (11) est fixé à la structure de hayon (2) par des troisièmes moyens de raccordement (14) qui comprennent des moyens de raccordement rapide, de sorte que le panneau de garniture, après l'étape c), est simultanément raccordé à la structure de hayon (2) par lesdits troisièmes moyens de raccordement (14), et simultanément raccordé, par au moins certains des éléments fonctionnels (4 - 6), par lesdits deuxièmes moyens de raccordement (21).

19. Procédé selon l'une quelconque des revendications précédentes, dans lequel, avant l'étape a), au moins une pluralité d'éléments fonctionnels (3 - 6) est montée sur le panneau de garniture (11) par lesdits premiers moyens de raccordement (12, 12a, 12b, 12c, 12d), de sorte que lesdits éléments fonctionnels restent dans des positions correspondantes aux positions qu'ils occupent dans le hayon arrière du véhicule.

20. Procédé selon l'une quelconque des revendications précédentes, **caractérisé en ce que** l'on utilise un panneau de garniture non structurel (11).

21. Module de montage pour monter une pluralité d'éléments fonctionnels (3 - 6) sur une structure de hayon arrière (2) pour un véhicule à moteur, le module de montage comprenant un panneau de garniture (11) auquel une pluralité d'éléments fonctionnels (3 - 6) est raccordée par des premiers moyens de raccordement (12, 12a, 12b, 12c, 12d) ;
**caractérisé en ce que** :
au moins une pluralité desdits éléments fonctionnels (3 - 6) est configurée pour être raccordée à la structure de hayon (2) par des deuxièmes moyens de raccordement (21), de sorte qu'au moins certains desdits éléments fonctionnels (3 - 6) sont raccordés à la structure de hayon (2) par lesdits deuxièmes moyens de raccordement (21) et, simultanément, restent raccordés au panneau de garniture (11) par lesdits premiers moyens de raccordement (12, 12a, 12b, 12c, 12d), une fois que le module de montage a été fixé sur la structure de hayon (2).

22. Module selon la revendication 21, dans lequel les premiers moyens de raccordement (12, 12a, 12b, 12c, 12d) comprennent des moyens de raccordement rapide afin de faciliter le montage des éléments fonctionnels sur le panneau de garniture (11).

23. Module selon la revendication 22, dans lequel lesdits moyens de raccordement rapide comprennent des attaches.

24. Module selon l'une quelconque des revendications 21 à 23, dans lequel lesdits premiers moyens de raccordement ne comprennent pas de boulon ni d'écrou.

25. Module selon l'une quelconque des revendications 21 à 24, **caractérisé en ce que** les premiers moyens de raccordement (12, 12a, 12b, 12c, 12d) comprennent des éléments qui font partie intégrante d'un panneau de garniture (11) et sont réalisés avec le même matériau que le panneau de garniture.

26. Module selon l'une quelconque des revendications 21 à 25, dans lequel les deuxièmes moyens de raccordement (21) comprennent des boulons et/ou des écrous.

27. Module selon l'une quelconque des revendications 21 à 26, dans lequel le panneau de garniture comprend au moins une ouverture (13), ladite au moins une ouverture étant positionnée en correspondance avec au moins un élément fonctionnel (3 - 6), de sorte que ledit au moins un élément fonctionnel peut être raccordé à la structure de hayon (2) avec lesdits deuxièmes moyens de raccordement (21) par le biais de ladite au moins une ouverture.

28. Module selon la revendication 27, dans lequel ladite au moins une ouverture (13) comprend au moins une ouverture sur un moteur d'essuie-glace arrière, moyennant quoi le moteur d'essuie-glace arrière (4) peut être raccordé à la structure de hayon (2) par lesdits deuxièmes moyens de raccordement (21).

29. Module selon la revendication 27 ou 28, dans lequel ladite au moins une ouverture (13) comprend au moins deux ouvertures latérales, moyennant quoi une fixation peut être réalisée entre un faisceau de fils (3) raccordé au panneau de garniture et aux feux arrière du véhicule.

30. Module selon l'une quelconque des revendications 27 à 29, dans lequel le module de montage comprend en outre au moins un capuchon (13a, 13b) pour fermer au moins l'une de ladite au moins une ouverture (13).

31. Module selon la revendication 30, dans lequel au moins un dudit au moins un capuchon (13a) fait partie du panneau de garniture (11) et est raccordé de manière pivotante au reste du panneau de garniture.

32. Module selon l'une quelconque des revendications 21 à 31, dans lequel, avant que le module ne soit fixé sur la structure de hayon (2), au moins une pluralité d'éléments fonctionnels (3 - 6) est montée sur le panneau de garniture (11) par lesdits premiers moyens de raccordement (12, 12a, 12b, 12c, 12d) de sorte que lesdits éléments fonctionnels restent dans des positions correspondant aux positions qu'ils occupent sur le hayon arrière du véhicule.

33. Module selon l'une quelconque des revendications 21 à 32, **caractérisé en ce que** le panneau de garniture (11) est un panneau de garniture non structurel.

34. Module selon l'une quelconque des revendications 21 à 33, dans lequel les éléments fonctionnels comprennent un moteur d'essuie-glace arrière (4) raccordé au panneau de garniture (11) de sorte qu'il permet audit moteur d'essuie-glace arrière de pivoter par rapport au panneau de garniture (11), permettant un changement d'orientation d'un arbre de sortie (41) du moteur d'essuie-glace arrière (4) pendant un procédé de montage de hayon arrière.

35. Hayon arrière pour un véhicule à moteur, qui comprend une structure de hayon (2) et raccordé à ladite structure de hayon (2), on trouve un module selon l'une quelconque des revendications 21 à 34.

36. Hayon arrière selon la revendication 35, dans lequel les éléments fonctionnels comprennent un faisceau de fils (3) qui est raccordé au panneau de garniture (11) par lesdits premiers moyens de raccordement (12, 12a) et qui n'est pas raccordé à la structure de hayon (2) par les deuxièmes moyens de raccordement.

37. Hayon arrière selon l'une quelconque des revendications 35 à 36, dans lequel les éléments fonctionnels comprennent un moteur d'essuie-glace arrière (4) qui est raccordé au panneau de garniture (11) par lesdits premiers moyens de raccordement (12b, 12c) et qui est raccordé à la structure de hayon (2) par les deuxièmes moyens de raccordement.

38. Hayon arrière selon l'une quelconque des revendications 35 à 37, dans lequel les éléments fonctionnels comprennent au moins un support de libération externe (5), raccordé au panneau de garniture (11) par lesdits premiers moyens de raccordement (12d), et raccordé à la structure de hayon (2) par lesdits deuxièmes moyens de raccordement (21).

39. Hayon arrière selon l'une quelconque des revendications 35 à 38, dans lequel les éléments fonctionnels comprennent au moins un verrou (6) raccordé au panneau de garniture (11) par lesdits premiers moyens de raccordement (12d) et raccordé à la structure de hayon (2) par lesdits deuxièmes moyens de raccordement (21).

40. Hayon arrière selon l'une quelconque des revendications 35 à 39, dans lequel le panneau de garniture (11) comprend des troisièmes moyens de raccordement (14) moyennant quoi le panneau de garniture est raccordé à la structure de hayon (2), de sorte que le panneau de garniture est simultanément raccordé à la structure de hayon (2) par lesdits troisièmes moyens de raccordement (14), et simultanément raccordé, par le biais d'au moins certains des éléments fonctionnels (4-6), par lesdits deuxièmes moyens de raccordement (21).
